Europäisches Patentamt

European Patent Office

Office européen des brevets

Publication number: **0 289 837**

**A2**

## EUROPEAN PATENT APPLICATION

Application number: 88106081.8

Date of filing: 16.04.88

Int. Cl.⁴ **G01F 23/24**

Priority: 07.05.87 US 46770

Date of publication of application:
09.11.88 Bulletin 88/45

Designated Contracting States:
AT BE CH DE ES FR GB GR IT LI NL SE

Applicant: **Becton Dickinson and Company**
**One Becton Drive**
**Franklin Lakes New Jersey 07417-1880(US)**

Inventor: **Smith, Randall W.**
**1681 E. Edgecliff Drive**
**Sandy Salt Lake County Utah(US)**
Inventor: **Miles, Scott D.**
**1641 North 50 East**
**Orem Utah County Utah(US)**
Inventor: **Sheetz, Kevin W.**
**5319 Majestic Village Circle**
**Murray Salt Lake County Utah(US)**

Representative: **Selting, Günther, Dipl.-Ing. et**
**al**
**Patentanwälte von Kreisler, Selting, Werner**
**Deichmannhaus am Hauptbahnhof**
**D-5000 Köln 1(DE)**

Liquid level sensing device.

A liquid level sensing device comprises an electrically non-conductive member having an outer surface and having a distal portion for immersion in liquid. Two electrically conductive elements are positioned in spaced relationship with respect to each other on the outer surface of the member on the distal portion thereof. Each of the conductive elements are connectable to an electrical circuit so that an electrical signal is detectable when both of the conductive elements contact the liquid into which the distal portion of the member is immersed. In this fashion, the level of liquid in a container or well may be sensed.

Fig. 3

# LIQUID LEVEL SENSING DEVICE

## BACKGROUND OF THE INVENTION

### 1. Field of the Invention.

The present invention relates to a liquid level sensing device, and more particularly, concerns such a device which is suitable for use in an apparatus for analyzing substances for determining the level of liquid in a container, well or the like.

### 2. Background Description.

In many laboratory and testing procedures, liquid samples are prepared for analysis in different kinds of containers. For example, the liquid sample may be included in a test tube, multi-well plate, vial, bottle, petri dish or other containers. In performing a test or analysis on the liquid sample, it is frequently desirable that there be some indication that liquid is present in the container or receptacle or that the amount of liquid so contained is of sufficient quantity to carry out the indicated tests. One technique for determining the presence or adequate quantity of liquid in the container is to measure, sense or determine the height or level of liquid within the container. If, for example, the test requires a certain quantity or volume of liquid, the height measurement of liquid in a known-volume container may be readily associated with the actual volume of liquid contained therein.

In automated chemical or substance analyzers which are commonly known and available on the commercial market for rapidly analyzing a multiplicity of test samples, it is desirable to be able to sense the level of liquid in the container on an automatic basis. Specifically, a liquid level measuring probe or device, perhaps operative to provide an electrical signal, is automatically inserted into the container in which the liquid to be tested is included. Once the signal is obtained, the automatic analyzer instrument may be controlled to proceed with the test on the basis that there is liquid present in the container or that the liquid amount is sufficient to carry out the contemplated procedures. One such liquid sensing probe is described in U.S. Patent No. 3,883,305.

Further improvements in liquid level sensing devices are still being sought in order to achieve reductions in the cost of manufacturing, ease of use, operational performance and minimal maintenance, particularly for use on automated chemical or substance analyzers. It is to such an improvement that the present invention is directed.

## SUMMARY OF THE INVENTION

The liquid level sensing device of the present invention comprises an electrically non-conductive member having an outer surface and having a distal portion for immersion in liquid. Two electrically conductive elements are positioned in spaced relationship with respect to each other on the outer surface of the member on the distal portion thereof. There are means for connecting each of the conductive elements to an electrical circuit so that an electrical signal is detectable when both of the conductive elements contact the liquid into which the distal portion is immersed. Accordingly, the level of liquid in a container may be sensed, measured or determined.

In a preferred embodiment of the present invention, the liquid level sensing device is suitable for use in an apparatus for analyzing substances. This preferred device comprises an electrically non-conductive, elongate, cylindrical tube member having a longitudinal axis. The member has an outer surface and a distal portion, including a distal end, for immersion in a liquid whose level is to be sensed. Further included on the tube member is a proximal portion, located opposite from the distal portion. A passageway extends through the tube member along the longitudinal axis thereof. This passageway terminates at a first opening in the distal portion and at a second opening in the proximal portion of the tube member so that liquid is movable therethrough. A pair of elongate metallic strips extends along the outer surface of the tube member substantially parallel to its longitudinal axis. These strips are positioned in spaced relationship with respect to each other and extend to the distal portion of the tube member. The strips are connectable to an electrical circuit so that an electrical signal is detectable when both of the strips contact the liquid into which the distal portion of the tube member is immersed. In this fashion, the level of liquid in the container may be sensed.

In accordance with the principles of the present invention, a device is provided for sensing the level of liquid in a container or the like. The device of the present invention is most suitable, although not necessary, for inclusion in an automatic analyzing instrument or apparatus. In use in conjunction with such an instrument, the liquid level sensing device is insertable into a container in which the liquid sample for analysis is included. In order to automatically determine whether there is liquid present in the container or whether the liquid is of a sufficient quantity to carry out the contemplated analysis procedures, an electrical signal is derived when the electrically conductive elements contact the upper level of liquid in the container. By controlling or monitoring the derived electrical signal with known penetration of the sensing device or quantity of liquid in the container, consistent and accurate control of the liquid under analysis may be achieved, particularly in an automatic analyzer when many samples of liquid are being handled. In addition, the present invention combines liquid level sensing features with a tube member so that liquid is movable therethrough. Along these lines, liquid may be dispensed into the container or aspirated out of the container in conjunction with the level sensing features to provide accurate and fine control over the amount of liquid within the container. The preferred embodiment of the present invention facilitates cleanliness of the sensing device and minimizes the likelihood of build-up of residues on the device which may occur, particularly when used with biological or chemical samples. Further, the physical size of the electrically conductive elements of the sensing device may be made relatively small so that they do not appreciably add to the overall size of the sensing device. Other features and advantages of the present invention will become more apparent upon reading the Detailed Description below.

## BRIEF DESCRIPTION OF THE DRAWINGS

Fig. 1 is a side elevational view of the preferred embodiment of the liquid level sensing device of the present invention;

Fig. 2 is an end view of the liquid level sensing device of Fig. 1;

Fig. 3 is a cross-sectional view of the liquid level sensing device taken along line 3-3 of Fig. 1;

Fig. 4 is a partial side elevational view illustrating the distal portion of an alternative embodiment of the liquid level sensing device of the present invention;

Fig. 5 is a partial side elevational view illustrating the distal portion of another embodiment of the liquid level sensing device of the present invention;

Fig. 6 is an enlarged partial elevational view illustrating an alternative embodiment of the proximal portion of the liquid level sensing device in which the electrically conductive element has a varying width; and

Fig. 7 is a side elevational view of the preferred liquid level sensing device as it may appear in use in an automatic analyzer for sensing the level of liquid in a container.

## DETAILED DESCRIPTION

While this invention is satisfied by embodiments in many different forms, there is shown in the drawings and will herein be described in detail preferred embodiments of the invention, with the understanding that the present disclosure is to be considered as exemplary of the principles of the invention and is not intended to limit the invention to the embodiments illustrated. The scope of the invention will be measured by the appended claims and their equivalents.

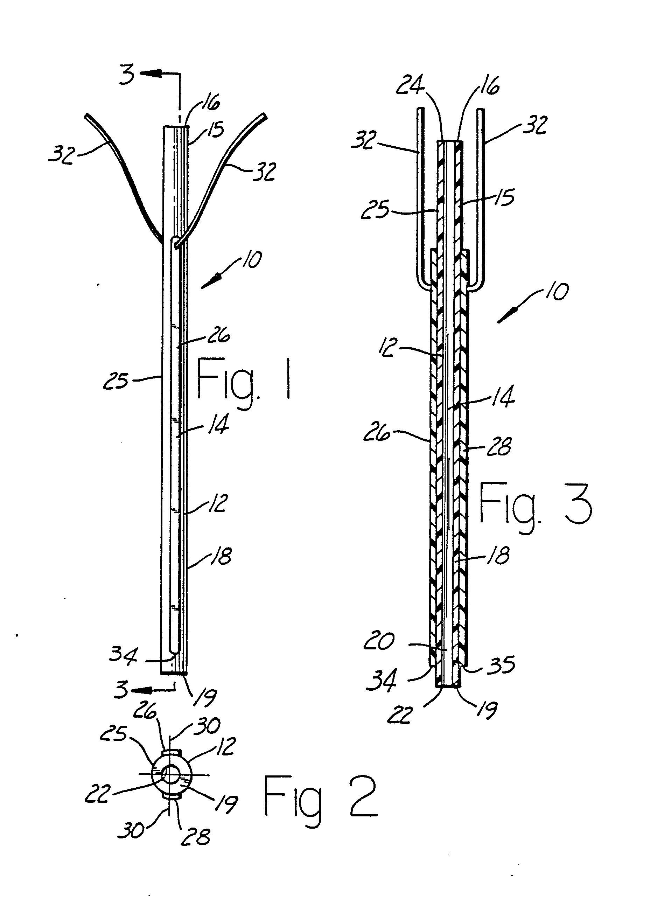

Adverting to the drawings, and Figs. 1-3 in particular, there is illustrated the preferred embodiment of the liquid level sensing device 10 of the present invention. In this embodiment it can be seen that sensing device 10 is comprised of an elongate, substantially slender tube member 12. In the preferred configuration, tube member 12 is cylindrically shaped and has a longitudinal axis 14 extending along the elongated dimension. Tube member 12 consists of a proximal portion 15, including a proximal end 16, and at the opposite end of the tube member is a distal portion 18, including a distal end 19. It is the distal portion of the tube member which is intended to be immersed in liquid, as will be described more completely hereinafter.

Extending through tube member 12 is a hollow passageway 20. This passageway extends along longitudinal axis 14 and, in the embodiment being described, extends completely through the tube member. Accordingly, passageway 20 terminates in an opening 22, preferably at distal end 19. In other embodiments (not shown in the drawings), the opening in communication with the passageway may, for example, extend through the side wall of tube member 12 at a side location in the distal portion of the tube member. At the opposite end of the tube member, passageway 20 terminates in an opening 24, again, preferably at proximal end 16. In a different embodiment (not shown in the drawings), opening 24 may extend through the side wall of proximal portion 15 for communication with passageway 20, rather than being located at proximal end 16. Passageway 20, along with openings 22 and 24, permits liquid to be movable through tube member 12, in either direction.

For purposes of the present invention, tube member 12 is fabricated so that it is electrically non-conductive. To this end, the tube member may be made from an electrically non-conductive material, such as plastic, or a fluoropolymer including polytetrafluoroethylene, polyvinyl chloride, polyethylene, and the like, or the tube member may be treated or coated to render it electrically non-conductive. Positioned on the outer surface 25 of tube 12 are two electrically conductive elements, preferably in the form of elongate metallic strips 26 and 28. These metallic strips preferably extend along the outer surface of the tube members substantially parallel to longitudinal axis 14. Strips 26 and 28 are spaced apart from each other so that they are out of electrical contact with each other and separated by the non-conductive characteristics of the tube member. In the embodiment being described, each metallic strip has a relatively thin width, and the center lines 30 of the strips (as more clearly seen in Fig. 2) are located so that they are preferably and substantially 180° apart or diametrically opposed from each other on the outer surface of the tube member. This spaced location of the metallic strips is not limitative of the invention, since the strips may be spaced at different angular locations on the outer surface of the tube member, if desired. Metallic strips 26 and 28 may be deposited or adhered to the outer surface of the tube member and, for example, may be made out of copper, and then gold plated for optimum performance for the contemplated uses of the sensing device. For example, gold plating the metallic strips helps keep the strips clean and minimizes contamination, particularly should there be a reaction with the liquids into which the sensing device is to be immersed. Further, it is preferred that the metallic strips be made as thin as possible on the outer surface of the tube member; this thinness together with the relatively narrow width of each strip contributes to minimizing the overall size and weight of the sensing device.

So that electrical signals may be obtained from the metallic strips as a result of contact with a liquid, such as an electrolytic liquid, the embodiment of Fig. 1 includes an electrical wire 32 preferably attached to or engaged on each metallic strip. It can be seen in the drawings that electrical wires 32 are positioned at the end of the metallic strips on proximal portion 15 of the tube member. This is merely the preferable location for including the electrical wires, so that the wires may be ultimately connected to an electrical circuit so that an electrical signal is passable therethrough to the circuit when both of the strips contact the liquid, the level of which is to be sensed.

In the embodiments of the liquid level sensing device of Figs. 1-3, it can be seen that metallic strips 26 and 28 extend on the outer surface of the tube member to a position on to distal portion 18. Strip 26 terminates at distal point 34, while strip 28 terminates at distal point 35. In this embodiment being described, distal points 34 and 35 are both inwardly and proximally spaced from distal end 19 of the tube member. This inward spacing of the distal points of the metallic strips assures that distal end 19 of the tube member will be actually immersed in the liquid to be sensed during the sensing procedures.

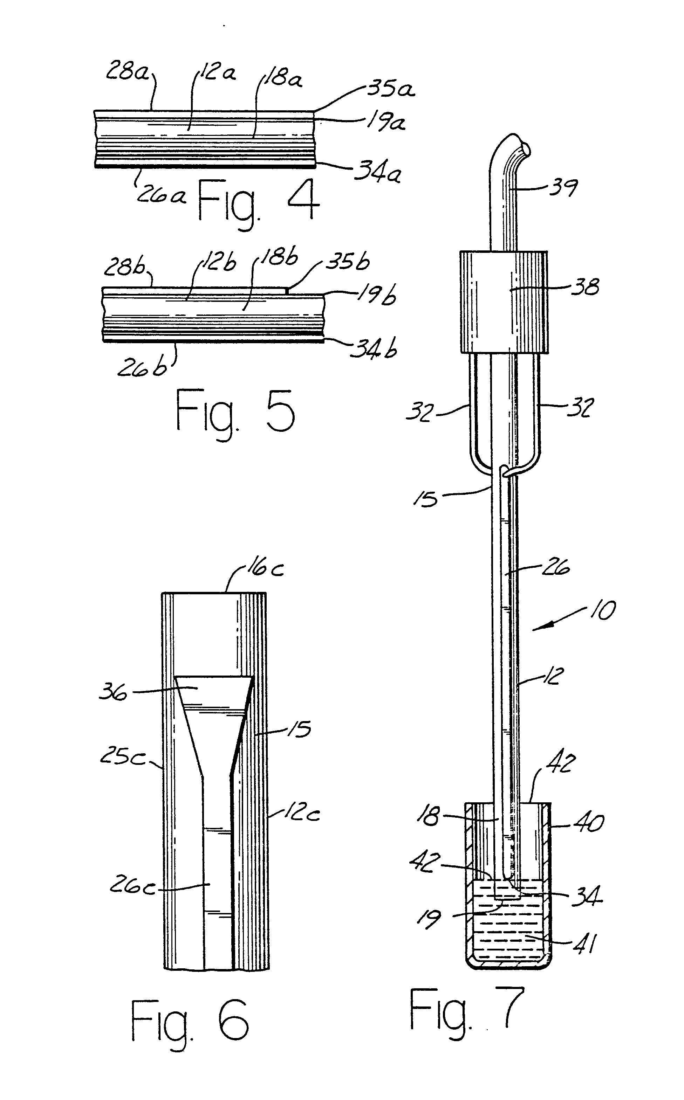

Different arrangements of the distal points of the metallic strips are contemplated by the present invention. For example, as seen in Fig. 4, one alternative embodiment of the metallic strips is illustrated. In Fig. 4, distal portion 18a of tube member 12a includes metallic strips 26a and 28a on the outer surface, in similar fashion to the previously described embodiment. However, distal point 34a of metallic strip 26a and distal point 35a of metallic strip 28a both extend to distal end 19a of tube member 12a.

Fig. 5 represents another alternative embodiment with respect to the arrangement of the metallic strips. In Fig. 5, distal portion 18b of tube member 12b includes metallic strip 26b and 28b. In this embodiment, distal point 34b of metallic strip 26b extends to distal end 19b of tube member 12b. On the other hand, distal point 35b of metallic strip 28b extends on to distal portion 18b of the tube member, but is inwardly spaced a short distance from distal end 19b.

A different or alternative embodiment with respect to the width of the metallic strips is illustrated in Fig. 6. In this embodiment, it can be seen that the width of metallic strip 26c varies along outer surface 25c of tube member 12c. More specifically, metallic strip 26c expands in width within proximal portion 15c of the tube member, in this embodiment terminating in a widened pad 36. This pad may be used to connect the electrical wire, as described in conjunction with Fig. 1, or pad 36 may be used as a contact area for an electrical connector or other contact mechanism for establishing an electrical path between the metallic strips and an electrical circuit for signal processing. Other arrangements or configurations of the metallic strip are also within the purview of the present invention.

Turning now to Fig. 7, liquid level sensing device 10 is illustrated at it might appear in an automated chemical or substance analyzer for sensing the level of liquid in a container. In Fig. 7, proximal portion 15 of device 10 is engaged by a connector 38 associated with a conduit 39 so that fluid communication is established between conduit 39 and passageway 20 within tube member 12.

Electrical wires 32 may be passed to or through connector 38 so that metallic strips 26 and 28 may be connected to an electrical circuit within the analyzer instrument, as previously described. During use, distal portion 18 of the tube member may be introduced into a container 40 which holds the liquid 41 to be tested or analyzed. Container 40 may be any feasible receptacle for holding liquid, including a test tube, reagent well, vial, or the like, preferably including an open end 42 through which tube member 12 may be inserted. Liquid 41 may be introduced into container 40 through tube member 12 if the liquid level sensing device of the present invention is intended to be used as a liquid dispenser. On the other hand, conduit 39 may be connected to a vacuum pump or the like in order to aspirate liquid 41 out of container 40.

In either event, if it is required to sense the presence of the liquid in the container or the amount of the liquid, the upper level 42 of the resting liquid within the container is a point which may be measured or sensed. In an electrolytic fluid such as blood serum, saline solution, other salts in solution and the like, an electrical signal is produced as soon as metallic strips 26 and 28 contact upper level 42 of liquid 41. Indeed, fairly precise control or information about the liquid level may be determined by virtue of contact of the liquid with only distal points 34 and 35 of the respective metallic strips. Therefore, as soon as contact· is made with the distal points of the metallic strips as the distal portion of the tube member is immersed in the liquid, an electrical signal is derived for further processing. This further processing could, for example, by virtue of the electronics in the instruments, inform the user that container 40 has a specific volume of liquid therein consistent with the test or analysis to be performed. In the event that there is too much liquid in the container, liquid may be aspirated through the passageway within the tube member until electrical contact is broken between the liquid and the metallic strips.

Thus, the present invention provides a liquid level sensing device, particularly suitable for use in an automated chemical or substance analyzer. Liquid levels may be sensed inside a variety of containers, including such containers commonly used in the laboratory environment. The device of the present invention is useful for verifying the presence of liquid in the container or to sense that there is sufficient quantity of the liquid in order to conduct the test at hand. The physical size of the device of the present invention, including the metallic strips, is relatively small so that the device remains quite clean and resistant to build-up of substances on the distal tip of the device which is immersed in the liquid. Plastic materials, as mentioned above, out of which the tube member may be made, facilitate this cleanliness due to the hydrophobic nature of the plastic materials.

## Claims

1. A liquid level sensing device comprising:
an electrically non-conductive member having an outer surface and having a distal portion for immersion in liquid;
two electrically conductive elements positioned in spaced relationship with respect to each other on the outer surface of said member on the distal portion thereof; and
means for connecting each of said conductive elements to an electrical circuit so that an electrical signal is detectable when both of said conductive elements contact the liquid into which said distal portion is immersed whereby the level of the liquid may be sensed.

2. The device of Claim 1 wherein said member is elongate along a longitudinal axis thereof.

3. The device of Claim 2 wherein said member has a passageway therethrough extending along said longitudinal axis, said passageway terminating in an opening in said distal portion so that liquid is movable through said opening.

4. The device of Claim 3 wherein said member includes a second opening in fluid communication with said passageway so that liquid is movable through said member and said member includes a proximal portion and said second opening is located along said longitudinal axis at the end of the passageway in the proximal portion of the member.

5. The device of Claim 2 wherein said conductive elements are elongate metallic strips extending along the outer surface of the member substantially parallel to the longitudinal axis thereof.

6. The device of Claim 5 wherein said distal portion has a distal end and at least one of said strips extends to said distal end.

7. The device of Claim 5 wherein the width of the strips varies along the outer surface of said member.

8. A liquid level sensing device suitable for use in an apparatus for analyzing substances comprising:
an electrically non-conducive, elongate, cylindrical tube member having a longitudinal axis thereof, said member having an outer surface and a distal portion, including a distal end, for immersion in a liquid whose level is to be sensed, said member including a proximal portion opposite from said distal portion, said member including a passageway therethrough extending along said longitudinal axis, said passageway terminating at a first opening in said distal portion and at a second opening in said proximal portion so that liquid is movable through said member:

a paid of elongate metallic strips extending along the outer surface of the member, said strips positioned in spaced relationship with respect to each other, said strips extending to the distal portion of said member, said strips being connectable to an electrical circuit so that an electrical signal is detectable when both of the said strips contact the liquid into which said distal portion is immersed whereby the level of the liquid may be sensed.

9. The device of Claim 8 wherein each strip extends to a different termination point on the distal portion of said member.

10. The device of Claim 8 wherein said member is plastic and said strips are attached thereto.

0 289 837

Fig. 1

Fig. 2

Fig. 3

0 289 837

Fig. 4

Fig. 5

Fig. 6

Fig. 7